# EUROPÄISCHE PATENTSCHRIFT

(11) **EP 0 460 511 B1**
(45) Veröffentlichungstag und Bekanntmachung des Hinweises auf die Patenterteilung: **10.06.1998**
(21) Anmeldenummer: 91108726.0
(22) Anmeldetag: 28.05.1991
(51) Int. Cl.: G01F 17/00, G01F 11/28, G01M 3/32

(54) **Verfahren zum Messen des Volumens von Behältnissen**
Methods for the measuring of the volume of containers
Procédés de mesure du volume de récipients

(30) Priorität: 02.06.1990 DE 4017853
(43) Veröffentlichungstag der Anmeldung: 11.12.1991
(60) Teilanmeldung: 97120677.6
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(56) Entgegenhaltungen:
- EP-A- 313 678
- EP-A- 0 295 371
- DE-A- 2 210 226
- DE-A- 3 315 238
- DE-A- 3 630 078
- MODERNE MESSMETHODEN DER PHYSIK, Teil 1, 3. Auflage, Berlin 1968, VEB, Deutscher Verlag der Wissenschaften F.X. Eder "Mechanik, Akustik" Seite 132
- CHROMATOGRAPHIE IN DER GASPHASE, Teil 2, 1961, Bibliographisches Institut Mannheim; R. KAISER "Kapillar Chromotographie" Seiten 42 - 43

## Beschreibung

Die vorliegende Erfindung betrifft eine Verwendung eines Verfahrens sowie eine Vorrichtung zum Prüfen des Volumens von Behältern.

Aus der EP-A-0 313 678 ist ein Verfahren bekannt geworden, bei dem für die Dichteprüfung von Behältern sowie die Erfassung von druckbewirkten Volumen-Änderungen ein Signal ausgewertet wird, welches vom Volumen des geprüften Behälters abhängt. Es wird ein zu prüfender Behälter in eine Prüfkammer eingelegt, womit das Differenzvolumen zwischen Prüfkammer und zu prüfendem Behälter ein vom Behältervolumen abhängiges Volumen bildet. Dieses Volumen wird von einer voraufgeladenen Speicherkammer durch Oeffnen eines in einer Verbindungsleitung vorgesehenen Ventiles mit einem Gas unter Druck beaufschlagt, und es ergibt sich aus dem Druckverhältnis vor Oeffnen und nach Oeffnen des Ventiles auch Behältnisvolumen-Abhängige Anzeige aufgrund der Entspannung des Druckes aus der genannten voraufgeladenen Kammer in die Prüfkammer.

Aufgrund der plötzlichen Entspannung des unter Druck stehenden Gases aus der erwähnten Kammer in die Prüfkammer müssen relativ lange Zeitabschnitte abgewartet werden müssen, bis transiente Vorgänge des Druckausgleiches abgeklungen sind, beispielsweise, bedingt durch die schlagartige Gasentspannung einerseits und den damit einhergehenden, unkontrollierten Gasstrom, sowie das zeitabhängige Nachgeben der Wandung des zu prüfenden Behälters.

Von einer Prüfung zur nächsten fortschreitend, wird die Kammer jeweils wieder auf einen SOLL-Druck geladen.

Aus der EP-0 295 371 ist es bekannt, in einem Strom anfallende Kunststoffflaschen auf ihr Volumen zu prüfen. Hierzu wird Luft mittels einer Kolben/Zylinderanordnung, über ein Leitungssystem, in die jeweils zu prüfende Flasche eingepresst und aus der so eingepressten Luftmenge und dem resultierenden Druck in der Flasche auf das Volumen geschlossen.

Aus der DE-OS-22 10 226 ist es bekannt, vor Füllen eines Hohlraumes in einem Betonbauwerk das Volumen dieses Hohlraumes dadurch zu messen, dass Gas in den Hohlraum eingeleitet wird und das Volumen der einströmenden Gasmenge gemessen wird. Daraus und aus dem resultierenden Druck wird auf das Volumen geschlossen.

Aus der DE-OS-33 15 238, schliesslich, ist es bekannt das Volumen evakuierter Hohlräume dadurch zu messen, dass eine Konstante Gasmenge pro Zeiteinheit in den Hohlraum eingelassen wird und aus dem resultierenden Druckverhalten auf das Hohlraumvolumen geschlossen wird.

Die vorliegende Erfindung setzt sich zum Ziel, an einem Volumenprüfverfahren für in einem Strom anfallende Behälter die Messzyklus zeit zu reduzieren.

Dies wird nach dem Wortlaut von Anspruch 1 durch Verwendung eines für die Volumenmessung aus der DE-OS-33 15 238 bekannten Verfahrens erreicht.

Durch die Möglichkeit, dadurch die Zeitspannen transienter Druckausgleichsvörgange zu reduzieren, können auch die Messzykluszeiten reduziert werden.

Dadurch, dass dem vom Behältervolumen abhängigen Volumen das Gas mit pro Zeiteinheit Konstanter Menge zugeführt wird, ist es möglich, die wegen transienter Vorgänge für eine relevante Messung abzuwartenden Zeitspannen drastisch zu reduzieren.

Es wird bevorzugterweise nach dem Wortlaut von Anspruch 2 vorgeschlagen, das Gas in die Behälter selbst einzuführen, womit das Innenvolumen der Behälter direkt als das obgenannte, vom Behältervolumen abhängige Volumen wirkt.

In einer ersten Ausführungsvariante gemäss Wortlaut von Anspruch 3 wird eine Zeitspanne als Anzeigesignal gemessen, bis der Druck in dem genannten, vom Behältervolumen abhängigen Volumen einen vorgegebenen Wert erreicht hat, dies selbstverständlich bei in dieser Zeitspanne gegebenem konstantem Massestrom des dem genannten Volumen zugeführten Gases.

Durch Vorgabe des zu erreichenden Druckwertes kann die je Messzyklus benötigte Zeit weiter reduziert werden, indem bereits bei relativ geringfügigem Ueberdruck die bis dahin dem erwähnten Volumen zugeführte Gasmenge relevant ist für das zu testende bzw. zu prüfende Volumen.

Alternativ wird vorgeschlagen, nach Wortlaut von Anspruch 4, bis zum Erreichen eines vorgegebenen Druckes die dem erwähnten Volumen zugeführte Gesamt-Gasmenge zu messen.

In einer weiteren einfachen Variante wird vorgeschlagen, den Druck nach einer vorgegebenen Zeitspanne zu messen. Dies nach dem Wortlaut von Anspruch 5.

Eine erfindungsgemässe Vorrichtungsverwendung obgenannter Gattung zeichnet sich nach dem Wortlaut von Anspruch 6 aus.

Dadurch, dass die Quelle pro Zeiteinheit eine konstante Gasmenge abgibt und nicht durch zweipunktartiges Oeffnen eines Ventiles schlagartig eine Kammer in das zu prüfende Volumen entladen wird, wird es grundsätzlich möglich, transiente Vorgänge, wie sie bei schlagartiger Gasdruckladung entstehen, zu vermeiden, damit die bis zum Abklingen solcher Vorgänge abzuwartenden Zeiten zu eliminieren.

Bevorzugterweise werden dabei die Behälter selbst durch Gas beaufschlagt, und es sind Anschlüsse vorgesehen zum dichten Verbinden der Behälter mit der Verbindungsleitung. Auf diese Art und Weise ist es möglich, ein oder mehrere Behälter, wie insbesondere Kunststoff-Flaschen, während ihrer Durchlaufproduktion zu prüfen, und zwar nicht nur stichprobenartig, sondern, wie erwähnt, alle aus der Produktion kommenden und weitergeführten Behälter.

Weitere bevorzugte Ausführungsvarianten der erfindungsgemässen Verwendung sind in den Ansprüchen 8 bis 12 spezifiziert.

Im hier interessierenden Zusammenhang ist zu bedenken, dass für das Testen des Volumens der Behälter, wie beispielsweise von Flaschen, die Anschlüsse für die Gaszuführung den jeweiligen Ausformungen der Behälter im Oeffnungsbereich angepasst werden müssen. Dies führt zum Vorschlag nach Anspruch 12.

Die Erfindung wird anschliessend beispielsweise anhand von Figuren erläutert.

Es zeigen:
- Fig. 1a: schematisch eine erfindungsgemässe Prüfvorrichtung, bei der als vom zu prüfenden Volumen abhängiges Volumen dasjenige einer Prüfkammer eingesetzt wird,
- Fig. 1b: über der Zeit, qualitativ, den Verlauf des Druckes in der Prüfkammer bei deren Beschickung mit einem konstanten Gasmassestrom zur Erläuterung der Bereitstellung eines Auswertesignals in einer ersten Variante,
- Fig. 1c: eine Darstellung analog zu derjenigen von Fig. 1b zur Erläuterung einer weiteren Bereitstellungsvariante für das Auswertesignal,
- Fig. 1d: eine Darstellung der geflossenen Gasmasse über dem Druck in der Prüfkammer, zur Darstellung einer weiteren Variante zur Bereitstellung des Auswertesignals,
- Fig. 2: eine Darstellung analog zu Fig. la einer Ausführungsvariante der erfindungsgemässen Vorrichtung, bei der als vom zu prüfenden Volumen abhängiges Volumen direkt dasjenige eines zu prüfenden Behälters eingesetzt wird,
- Fig. 3: in Darstellung analog zu derjenigen von Fig. 2, schematisch, die Prüfung von Behältergruppen in Linie während der Fertigung der Behälter,
- Fig. 4: eine Längsschnittdarstellung eines Anschlusses für Behälter, verwendet bei den erfindungsgemässen Ausführungsformen gemäss den Fig. 2 und 3.

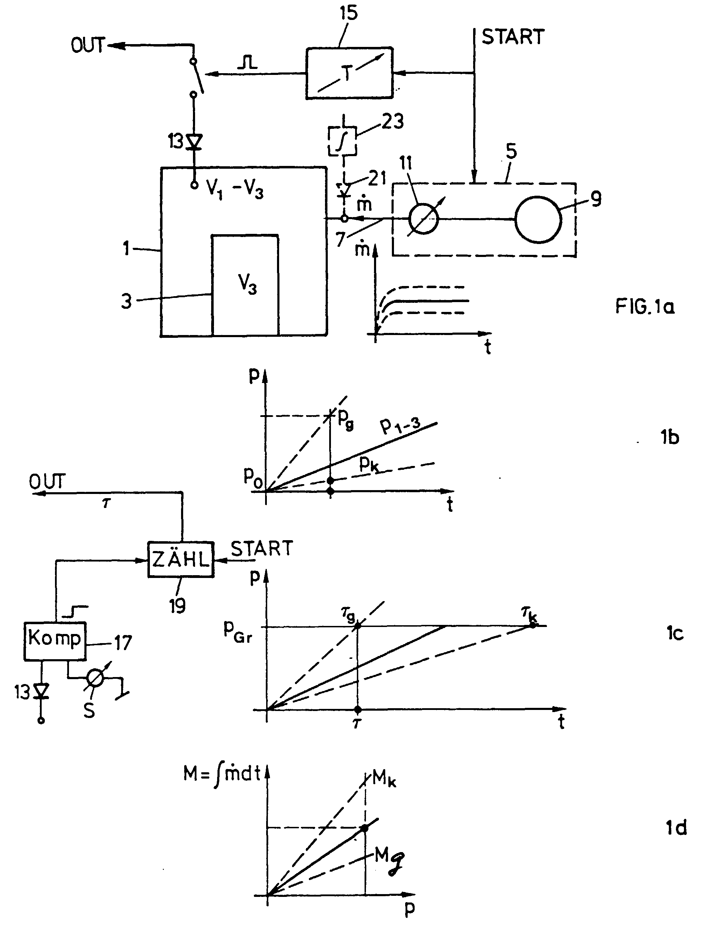

In Fig. 1a ist schematisch eine Prüfkammer 1 dargestellt, worin ein bei dieser Ausführungsvariante geschlossener, gegebenenfalls mit seinem Füllgut gefüllter Behälter 3 in eine Kammer 1 eingeführt wird. Das Einführen des zu prüfenden Behälters 3 mit Volumen V₃ in die Kammer 1, wodurch in der Kammer das Differenzvolumen V₁ - V₃ entsteht, erfolgt durch einen hier nicht dargestellten, dichtend verschliessbaren Einfülldeckel.

An der Kammer 1 ist eine Druckgasquelle 5 über eine Verbindungsleitung 7 angeschlossen. Wie schematisch dargestellt, erlaubt die Quelle 5 grundsätzlich den über Leitung 7 dem Volumen V₁ - V₃ pro Zeiteinheit zugeführten Gasmassestrom ṁ gesteuert konstant einzustellen. Hierzu ist beispielsweise ein Speichertank 9 vorgesehen für das Druckgas sowie ein durchflussmengengeregeltes Stellglied 11, wie beispielsweise ein stetig verstellbares Ventil.

Diese höchst einfache Volumenprüfeinrichtung arbeitet, wie anhand der Fig. 1b bis le erläutert wird.

Nach Einbringen des zu prüfenden Volumens bzw. Behälters 3 wird mit Hilfe der Massestrom-ṁ-gesteuerten Quelle 5 der Fluss eines vorbestimmten Gasmassestromes ṁ, beispielsweise mit Hilfe des stetig verstellbaren Ventiles 11 eingestellt. Ueber der Zeit t steigt nun der Druck p₁₋₃ im Differenzvolumen V₁ -V₃ an. Dieser Druck wird mittels eines Drucksensors 13 erfasst.

Gleichzeitig mit der Inbetriebsetzung bzw. der Oeffnung des Ventiles 11 wird eine Zeitgebereinheit 15 gestartet, welche nach einer vorgebbaren Zeitspanne T den Ausgang des Drucksensors 13 zur weiteren Auswertung und mithin als Testauswertesignal ausliest bzw. weiterschaltet.

Wie aus Fig. 1b ersichtlich, wird der nach der einstellbaren Zeitspanne T sich in der Kammer 1 mit dem Differenzvolumen V₁ -V₃ einstellende Druck bei einem grösseren Volumen V₃ einen tieferen Wert pₖ, bei einem kleineren Volumen V₃ einen grösseren Wert p_{g} erreichen.

Mithin wird der nach der einstellbaren Zeitspanne T im Differenzvolumen bzw. in dem vom zu prüfenden Volumen V₃ abhängigen Volumen erreichte Druck als Auswertesignal für den Volumentest gewertet.

In einer zweiten Variante der Auswertungen, wie in Fig. 1c dargestellt, wird anstelle einer vorgebbaren Zeit ein vorgegebener Druckwert p_{Gr}, einstellbar, vorgegeben. Hierzu wird, wie links in Fig. 1c dargestellt, der Ausgang des Drucksensors 13 einem Komparator 17 zugeführt, welchem, als Vergleichswert, ein Signal S entsprechend dem eben erwähnten Druck p_{Gr} eingegeben wird. Mit dem anhand von Fig. 1a erläuterten Startsignal wird ein Zeitzähler 19 gestartet und mit dem Komparatorausgangssignal, d.h. dann, wenn der gemessene Druck am Sensor 13 einen Wert S entsprechend dem vorgebbaren Grenzdruckwert p_{Gr} erreicht, gestoppt. Die dann am Zähler 19 erfasste Zeitgrösse τ wird als volumenanzeigendes Signal ausgewertet.

Wie im Verlauf rechts von Fig. 1c dargestellt, wird bei einem grösseren zu prüfenden Volumen V₃ die Zeitspanne τₖ grosser als bei einem kleineren zu testenden Volumen, wo sie, wie qualitativ dargestellt, mit τ_{g} Kleiner wird.

In Fig. 1d ist eine weitere Variante zur Prüfsignalbereitstellung gezeigt. Mittels eines in Fig. 1a gestrichelt dargestellten Fühlers 21 wird die pro Zeiteinheit dem Differenzvolumen V₁ - V₃ zugeführte Gasmenge, der Masse- bzw. Volumenstrom ṁ, gemessen und an einer Integrationseinheit 23 über der Zeit integriert, womit die ab Beginn des Messzyklus geflossene Gasmenge erfasst ist.

Nun wird gemäss Fig. 1d wiederum ein Grenzdruck p_{Gr} vorgegeben und die ab Messzyklusbeginn geflossene Gasmenge bis zum Erreichen dieses Grenzdruckes gemessen. Ist das zu testende Volumen 3 grösser, so ist die bis zum Erreichen des Grenzdruckes geflossene Gasmenge Mₖ grosser als bei einem kleineren zu prüfenden Volumen, wie mit M_{g} dargestellt. Das Erreichen des Grenzdruckes p_{Gr} gemäss Fig. ld wird beispielsweise mit einem Drucksensor 13 und nachgeschaltetem Komparator 17 sowie der Vorgabe des Grenzdruckes p_{Gr}, wie links in Fig. 1c dargestellt, vorgenommen.

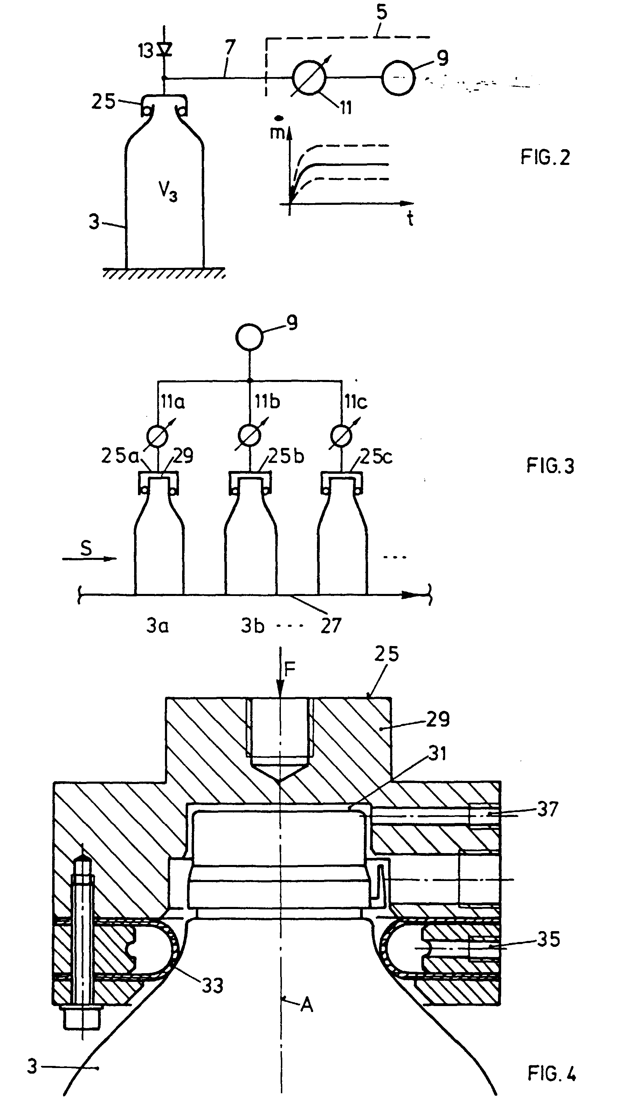

In Fig. 2 ist die zu Fig. 1a analoge Vorrichtung dargestellt, wenn das vom zu prüfenden Volumen abhängige Volumen direkt durch das Innenvolumen V₃ des zu prüfenden Behälters 3, wie beispielsweise einer Kunststoff-Flasche, gebildet wird. Hier wird der gegebenenfalls vorgesehene Drucksensor 13 von Fig. 1a direkt an der Förderleitung 7 zwischen einem Anschluss 25 zum dichten Anschliessen der Leitung 7 an die Oeffnung des Behälters 3 vorgesehen. Der Behälter ist hier, im Unterschied zur Ausführungsvariante von Fig. la, ein geöffneter Behälter, wie eine eben hergestellte Kunststoff-Flasche.

Vorgehensweise und Auswertungstechnik bleiben sich gleich, wie bereits anhand der Fig. 1 erläutert worden ist.

Die letzterwähnte Technik eignet sich, wie in Fig. 3 schematisch dargestellt, ausserordentlich gut zum Testen von in einem ununterbrochenen Strom S anfallenden, eben produzierten Behältern 3a, 3b etc., wobei entweder über flexible Anschlüsse die Volumenprüfung während der Behälterbewegung, beispielsweise auf einem Förderband 27, erfolgt, oder aber ein intermittierend getriebenes Förderband bzw. eine entsprechend betriebene Fördereinrichtung vorgesehen ist, wo ein Behälter oder, wie in Fig. 3 dargestellt, vorzugsweise mehrere Behälter gleichzeitig der Volumenprüfung unterzogen werden.

Um bei den Vorgehensweisen gemäss den Fig. 2 bzw. 3 Dichtungsprobleme bei z.B. herstellungstoleranzbedingten Abweichungen der Dimensionen und Formen der Oeffnungsbereiche 29 der zu testenden Behälter zu beheben bzw. um verschiedene Behälter an einer Produktionslinie ohne Umstellarbeiten testen zu können, wird vorgeschlagen, die Anschlussteile 25 gemäss den Fig. 2 und 3, wie in Fig. 4 dargestellt, auszubilden. Demnach umfasst ein erfindungsgemässes Anschlussteil ein Gehäuse 29, beispielsweise aus Metall oder Kunststoff, mit einer Aufnahme 31 zur Aufnahme der Oeffnungspartie des zu prüfenden Behälters 3, beispielsweise eines Flaschenhalses einer Kunststoff-Flasche.

Im unteren Bereich der Aufnahme 31 ist, koaxial zu einer Achse A der Aufnahme 31, ein umlaufender Balg 33 montiert, aus gummielastischem Material, und es sind an einer oder mehreren Stellen Druckmediumslei-tungen 35 vorgesehen, die in den Balg 33 einmünden, bevorzugterweise für ein Druckgas.

Im weiteren umfasst ein erfindungsgemässer Anschluss eine Zuführleitung 37, welche in die Aufnahme 31 einmündet und die, sofern der erfindungsgemässe Anschluss zu Volumentestzwecken gemäss den Fig. 2 oder 3 eingesetzt wird, an die Gaszuspeisungsleitung 7 angeschlossen wird.

Durch Aufblasen des Balges 33 wird der Anschluss 25 in seinem unteren Bereich dichtend an die Oeffnungspartie bzw. den Flaschenhals des jeweils zu testenden Behälters 3 angelegt. Es wird ein dichter Sitz erreicht, in weiten Grenzen unabhängig von der spezifischen Ausformung bzw. Dimensionierung dieser Oeffnungspartie. Bevorzugterweise wird beim Aufbringen des Anschlusses 25, wie mit F dargestellt, Druck auf den Anschluss 25 ausgeübt, der sich über den zu prüfenden Behälter 3 auf dessen jeweilige Standfläche überträgt, so dass bei Aufblasen und dichtem Anlegen des Balges 33 an die Aussenwandung des zu prüfenden Behälters 3, in axialer Richtung gemäss A, kein Weichen von Anschluss 25 bzw. Behälter 3 erfolgen kann.

In der beschriebenen Art und Weise können geschlossene oder geöffnete Behälter rasch einer Volumenprüfung unterzogen werden, indem die in den Figuren dargestellten und erläuterten Auswertesignale, wie nicht eigens erläutert, aber dem Fachmann ohne weiteres erkenntlich, einer weiteren Klassierung unterzogen werden: Je nachdem, ob die Auswertesignale, verglichen mit einem vorgegebenen Wert, zu gross oder zu klein sind, wird ein jeweils geprüfter Behälter als unzulässig gross oder unzulässig klein verworfen.

Durch die Steuerung der pro Zeiteinheit dem jeweiligen Volumen zugeführten Gasmenge ṁ entfallen Zeitabschnitte, in welchen Druckausgleich abgewartet werden muss, bis relevant gemessen werden kann.

Mit Hilfe des erfindungsgemäss vorgeschlagenen Anschlusses können im weiteren Behälter mit in weiten Grenzen unterschiedlich geformten bzw. dimensionierten Oeffnungspartien, wie Flaschenhälsen, dichtend kontaktiert werden, wie zu deren Füllen, oder, im Zusammenhang mit der Volumenprüfung, um die Behälter mit Prüfgas zu beaufschlagen.

## Patentansprüche

1. Verwendung eines Verfahrens zum Messen des Volumens von Hohlräumen, bei dem ein Gas mit konstantem Gasmassestrom (ṁ) in den Hohlraum eingegeben wird und aus der eingelassenen Gasmenge sowie der dadurch bewirkten Druckänderung auf das Hohlraumvolumen geschlossen wird, für die Ueberprüfung von Volumina, welche von denjenigen in einem Strom anfallenden Behältern abhängig sind, und dabei für die Reduktion von Zeitspannen transienter Druckausgleichsvorgänge.

2. Verwendung nach Anspruch 1, dadurch gekennzeichnet, dass das Gas in die Behälter selbst eingeführt wird.

3. Verwendung nach einem der Ansprüche 1 oder 2, dadurch gekennzeichnet, dass eine Zeitspanne (T) als Anzeigesignal gemessen wird, bis der Druck in den von den Behältersvolumina abhängigen Volumina (V₃, V₁-V₃) einen vorgegebenen Wert (p_{Gr}) erreicht hat.

4. Verwendung nach einem der Ansprüche 1 oder 2, dadurch gekennzeichnet, dass als Anzeigesignal die zugeführte Gasmenge (M) gemessen wird bis zum Erreichen eines vorgegebenen Druckes (p_{Gr}).

5. Verwendung nach einem der Ansprüche 1 oder 2, dadurch gekennzeichnet, dass als Anzeigesignal der Druck (p) nach einer vorgegebenen Zeitspanne (T) gemessen wird.

6. Verwendung einer Vorrichtung zum Messen des Volumens von Hohlräumen, welche eine Druckgasquelle sowie eine Verbindungsleitung von der Quelle zum Hohlraum aufweist und bei welcher die Quelle zur Ausgabe eines konstantem Gasmassestroms (ṁ) in den Hohlraum ausgebildet ist, für die Ueberprüfung von Volumina, welche von den Volumina in einem Strom anfallender Behälter abhängen und dabei fur die Reduzierung von Zeitspannen transienter Druckausgleichsvorgänge beim Beaufschlagen der Volumina mit dem Gas.

7. Verwendung nach Anspruch 6, dadurch gekennzeichnet, dass die Volumina diejenigen der Behälter (3) selbst sind und ein Anschluss (25) vorgesehen ist zum dichten Verbinden der Behälter (3) mit der Verbindungsleitung (7).

8. Verwendung nach einem der Ansprüche 6 oder 7, dadurch gekennzeichnet, dass eine Zeitmesseinrichtung (19) vorgesehen ist sowie ein Drucksensor (13) für die Behälter (1, 3) oder an der Leitung (7) und dass der Ausgang des Drucksensors (13) auf einen Vergleicher (19) geführt ist, die Zeitmesseinrichtung (19) durch ein Inbetriebsetzungssignal der Quelle (11, 9) ausgelöst und durch ein Ausgangssignal des Vergleichers (17) stillgesetzt wird, wobei das Ausgangssignal (τ) der Zeitmesseinrichtung das Prüfausgangssignal ist.

9. Verwendung nach einem der Ansprüche 6 oder 7, dadurch gekennzeichnet, dass ein Durchflussmengen-Messgerät (21, 23) an der Leitung (7) vorgesehen ist, dessen Ausgang, gesteuert durch den Ausgang einer Druckvergleichereinheit, als Prüfsignal ausgegeben wird.

10. Verwendung nach einem der Ansprüche 6 oder 7, dadurch gekennzeichnet, dass eine Druckmesseinrichtung (13) vorgesehen ist am Gefäss (1, 3) oder der Verbindungsleitung (7), deren Ausgangssignal, gesteuert durch eine Zeitvorgabeeinheit (15), als Prüfsignal ausgegeben wird.

11. Verwendung nach Anspruch 7 zum gleichzeitigen Prüfen mehrerer Behälter, dadurch gekennzeichnet, dass mehrere, gleichzeitig betriebene Anschlüsse (25a, b) vorgesehen sind.

12. Verwendung nach Anspruch 7, dadurch gekennzeichnet, dass der Anschluss (25) ein Anschlussgehäuse (29) mit mindestens einem Anschluss (37) für eine einmündende Leitung aufweist sowie, am Gehäuse, mindestens einen pneumatisch betriebenen, gummielastischen Balg (33), um, in Grenzen, unabhängig von der Gestalt der anzuschliessenden Behälterpartie (3) den Anschluss (25) dicht an die Behälteraussenwand zu applizieren.

## Claims

1. The use of a method for measuring the volume of cavities, in which a gas with a constant gas mass flow (ṁ) is introduced into the cavity and a conclusion on the volume of the cavity is drawn from the quantity of gas allowed in and also the pressure change caused thereby, for testing volumes which are dependent on those containers which are produced in a stream and in so doing for the reduction of time intervals of transient pressure compensation operations.

2. The use according to Claim 1, characterised in that the gas is introduced into the container itself.

3. The use according to one of Claims 1 or 2, characterised in that a time interval (T) is measured as display signal until the pressure in the volumes (V₃, V₁-V₃) dependent on the container volumes has reached a predetermined value (p_{Gr}).

4. The use according to one of Claims 1 or 2, characterised in that the quantity of gas supplied (M) is measured as display signal until a predetermined pressure (p_{Gr}) is achieved.

5. The use according to one of Claims 1 or 2, characterised in that the pressure (p) after a predetermined time interval (T) is measured as display signal.

6. The use of a device for measuring the volume of cavities, which has a compressed-gas source and also a connecting line from the source to the cavity and in which the source is designed to emit a constant gas mass flow (ṁ) into the cavity, for checking volumes which are dependent on the volumes of containers which are produced in a stream and in so doing for the reduction of time intervals of transient pressure compensation operations when supplying the volumes with the gas.

7. The use according to Claim 6, characterised in that the volumes are those of the containers (3) themselves and a connection (25) is provided for tightly connecting the containers (3) to the connecting line (7).

8. The use according to one of Claims 6 or 7, characterised in that a time measurement means (19) is provided and also a pressure sensor (13) for the containers (1, 3) or on the line (7) and that the output of the pressure sensor (13) is passed to a comparator (19), the time measurement means (19) is triggered by a start-up signal from the source (11, 9) and is stopped by an output signal from the comparator (17), the output signal (t) of the time measurement means being the test output signal.

9. The use according to one of Claims 6 or 7, characterised in that a throughflow measuring apparatus (21, 23) is provided on the line (7), the output of which, controlled by the output of a pressure comparator unit, is emitted as the test signal.

10. The use according to one of Claims 6 or 7, characterised in that a pressure measurement means (13) is provided on the vessel (1, 3) or the connecting line (7), the output signal of which, controlled by a time presetting unit (15), is emitted as the test signal.

11. The use according to Claim 7 for the simultaneous testing of a plurality of containers, characterised in that a plurality of simultaneously operated connections (25a, b) are provided.

12. The use according to Claim 7, characterised in that the connection (25) has a connection housing (29) with at least one connection (37) for an entering line, and also, on the housing, at least one pneumatically operated, rubber-elastic bellows (33), in order, within limits, to apply the connection (25) tightly to the outer container wall, independently of the shape of the container part (3) which is to be connected.

## Revendications

1. Utilisation d'un procédé pour mesurer le volume d'espaces creux selon lequel on introduit un gaz dans l'espace creux avec un courant de masse de gaz (ṁ) constant, et à partir de la quantité de gaz introduite et de la variation de pression ainsi provoquée, on tire une conclusion concernant le volume de l'espace creux, pour contrôler des volumes qui sont fonction du volume de récipients se présentant en flux, et pour réduire la durée de phénomènes transitoires de compensation de pression.

2. Utilisation selon la revendication 1, caractérisée en ce que le gaz est introduit dans les récipients eux-mêmes.

3. Utilisation selon la revendication 1 ou 2, caractérisée en ce qu'on mesure comme signal d'indication une durée (T) qui s'écoule avant que la pression régnant dans les volumes (V₃, V₁-V₃) qui sont fonction des volumes de récipients n'ait atteint une valeur prédéfinie (p_{Gr}).

4. Utilisation selon la revendication 1 ou 2, caractérisée en ce qu'on mesure comme signal d'indication la quantité de gaz (M) amenée avant qu'une pression prédéfinie (p_{Gr}) ne soit atteinte.

5. Utilisation selon la revendication 1 ou 2 caractérisée en ce qu'on mesure comme signal d'indication la pression (p) au bout d'une durée prédéfinie (T).

6. Utilisation d'un dispositif pour mesurer le volume d'espaces creux, qui comporte une source de gaz comprimé et une conduite de liaison allant de cette source à l'espace creux, et dans lequel la source est conçue pour dégager un courant de masse de gaz (ṁ) constant dans l'espace creux, pour contrôler des volumes qui dépendent du volume de récipients se présentant en flux, et pour réduire la durée de phénomènes transitoires de compensation de pression lorsque les volumes sont sollicités par le gaz.

7. Utilisation selon la revendication 6, caractérisée en ce que les volumes sont définis par les volumes des récipients (3) eux-mêmes, et il est prévu un raccordement (25) pour relier de façon étanche les récipients (3) à la conduite de liaison (7).

8. Utilisation selon la revendication 6 ou 7, caractérisée en ce qu'il est prévu un dispositif de chronométrage (19) ainsi qu'un capteur de pression (13) pour les récipients (1, 3) ou au niveau de la conduite (7), et en ce que la sortie du capteur de pression (13) est reliée à un comparateur (17), et le dispositif de chronométrage (19) est déclenché par un signal de mise en marche de la source (11, 9) et arrêté par un signal de sortie du comparateur (17), le signal de sortie (τ) du dispositif de chronométrage étant le signal de sortie de contrôle.

9. Utilisation selon la revendication 6 ou 7, caractérisée en ce qu'il est prévu, au niveau de la conduite (7), un débitmètre (21, 23) dont la sortie, commandée par la sortie d'une unité de comparaison de pression, est émise comme signal de contrôle.

10. Utilisation selon la revendication 6 ou 7, caractérisée en ce qu'il est prévu, au niveau du récipient (1, 3) ou de la conduite de liaison (7), un dispositif de mesure de pression (13) dont le signal de sortie, commandé par une unité de prédéfinition de temps (15), est émis comme signal de contrôle.

11. Utilisation selon la revendication 7 pour contrôler simultanément plusieurs récipients, caractérisée en ce qu'il est prévu plusieurs raccordements (25a, b) actionnés simultanément.

12. Utilisation selon la revendication 7, caractérisée en ce que le raccordement (25) comporte une enveloppe de raccordement (29) pourvue d'au moins un raccordement (37) pour une conduite qui débouche, et également, au niveau de ladite enveloppe, au moins un soufflet (33) élastique comme du caoutchouc et à commande pneumatique, afin d'appliquer le raccordement (25) de façon étanche contre la paroi extérieure du récipient indépendamment, dans certaines limites, de la forme de la partie de récipient à raccorder (3).
